# EUROPÄISCHE PATENTSCHRIFT

(11) **EP 2 487 394 B1**
(45) Veröffentlichungstag und Bekanntmachung des Hinweises auf die Patenterteilung: **02.04.2014**
(21) Anmeldenummer: 12153474.7
(22) Anmeldetag: 01.02.2012
(51) Int. Cl.: F16K 7/17, F16K 21/00, F16K 21/06, E03D 3/06

(54) **Servoventil, insbesondere zur Druckspülung eines Urinals**
Servo valve, in particular for pressure flushing a urinal
Servosoupape, notamment pour le rinçage par pression d'un urinoir

(30) Priorität: 10.02.2011 DE 102011000612
(43) Veröffentlichungstag der Anmeldung: 15.08.2012
(73) Patentinhaber: VIEGA GmbH & Co. KG, 57439 Attendorn (DE)
(72) Erfinder: Wessel, Heinz-Werner, 58840 Plettenberg (DE)
(74) Vertreter: Cohausz & Florack

(56) Entgegenhaltungen:
- EP-B1- 0 811 795
- US-A- 4 977 923
- US-A- 5 150 877

## Beschreibung

Die Erfindung betrifft ein Servoventil für Flüssigkeiten, insbesondere zur Druckspülung eines Urinals, mit einem zwischen einem Eingangskanal und einem Ausgangskanal angeordneten Ventilsitz, der durch ein aus einer Membran gebildetes erstes bewegliches Schließteil verschließbar ist, und mit einer Steuerkammer, die über einen Servokanal mit dem Eingangskanal kommuniziert und die zu ihrer Druckentlastung über ein Pilotventil, das ein zweites Schließteil aufweist, mit einer Druckentlastungskammer verbunden ist, die über einen Druckentlastungskanal mit dem Ausgangskanal kommuniziert.

Derartige Ventile sind bekannt. Sie kommen häufig bei elektronisch betätigten Wasserarmaturen, insbesondere bei Urinal-Druckspülern zum Einsatz, bei denen die Wasserspülung üblicherweise mittels eines berührungslos funktionierenden Sensors, einer zugehörigen elektronischen Steuerung und eines elektromagnetischen Stellgliedes bzw. Pilotventil ausgelöst wird. Hinsichtlich des Standes der Technik wird beispielsweise auf die Dokumente AT 341 843, DE 39 25 873 C2 und EP 0 811 795 B1 verwiesen.

In nicht wenigen sanitären Einrichtungen, in denen derartige Servoventile installiert sind, treten in der Schließphase des Ventils Geräusche bzw. Druckschläge auf, die von den Benutzern der sanitären Einrichtung als störend empfunden werden. Diese als Rattern wahrnehmbaren Geräusche bzw. Druckschläge treten häufig dann auf, wenn in Fließrichtung betrachtet, der Armaturenauslauf oberhalb des Servoventils angeordnet ist. Verursacht werden diese Geräusche bzw. Druckschläge durch Unterdruckeffekte beim Schließen des Ventils. In der am Servoventil angeschlossenen Abgangsleitung treten nämlich relativ hohe Fließgeschwindigkeiten auf, jedenfalls dann, wenn die Abgangsleitung einen geringeren Leitungsquerschnitt aufweist als die am Eingangsstutzen des Ventils angeschlossene Zulaufleitung. Schließt ein herkömmliches Servoventil, so entsteht in Fließrichtung hinter dem Ventilsitz ein Unterdruck durch Abriss der beschleunigten Strömung. Sinkt der Druck unter den Dampfdruck der Flüssigkeit ab, so bilden sich Dampfblasen, die bei nachfolgender Druckzunahme kondensieren. Dieser als Kavitation bezeichnete Vorgang ist infolge der plötzlichen Volumenänderung mit schlagartigen Druckstößen verbunden, die das soeben geschlossene Ventil öffnen können. Beim erneuten Schließen kann es wiederum zu schlagartigen Druckstößen kommen, jedoch mit abnehmender Intensität. Diese (auch als Druckschläge bezeichneten) Druckstöße strahlen durch Körperschallübertragung auf die an dem Servoventil angeschlossene Sanitäreinrichtung aus.

Aus der DE 298 19 769 U1 ist ein Servoventil für Flüssigkeiten bekannt, in dessen Ventilgehäuse ein auf einem Ventilsitz aufsitzender Ventilteller bewegbar angeordnet ist. Zwischen dem Ventilsitz und dem Ventilausgang ist eine Geräuschdämpfungsvorrichtung in Form eines Dämpfungskörpers angeordnet, der aus einem kompressiblen, geschlossenzelligen Schaumstoff besteht. Der Dämpfungskörper ist dabei mit dem Ventilteller verbunden, und zwar an einem den Ventilsitz durchgreifenden Führungszapfen des Ventiltellers befestigt.

Die US 5 150 877 A offenbart ein als Servoventil ausgeführtes Wasserspülventil. Das Spülventil weist an einem Ende seines den Einlass und den Auslass verbindenden Durchgangs einen Ventilsitz auf, an dem eine Membran angeordnet ist, um den Wasserfluss durch den Durchgang zu steuern und dabei den Ventilsitz zu schließen. An der Unterseite der Membran ist ein zapfenförmiges Führungselement angebracht, an dem ein Nachfüllring befestigt ist. Die Außenseite des Nachfüllringes ist mit einer Vielzahl von Ausnehmungen versehen, die den Wasserfluss durch den Ventildurchgang leiten. Die Ausnehmungen sind durch Rippen voneinander getrennt und weisen jeweils einen Abschnitt konstanter Weite und einen Abschnitt mit sich allmählich ändernder Weite auf, wobei die Rippen in ständiger Berührung mit der Innenseite des Ventildurchgangs sind. Der Hub der Membran bei ihrer Bewegung zwischen der voll geöffneten Ventilstellung und der Schließstellung beträgt etwa die halbe Axiallänge des Nachfüllringes.

Der vorliegenden Erfindung liegt die Aufgabe zugrunde, ein Servoventil der eingangs genannten Art bereitzustellen, das bei hoher Zuverlässigkeit druckschlagfrei und relativ leise schließt.

Diese Aufgabe wird erfindungsgemäß durch ein Servoventil mit den Merkmalen des Anspruchs 1 gelöst.

Das erfindungsgemäße Servoventil umfasst einen zwischen einem Eingangskanal und einem Ausgangskanal angeordneten Ventilsitz, der durch ein aus einer Membran gebildetes erstes bewegliches Schließteil verschließbar ist. Ferner umfasst das erfindungsgemäße Servoventil eine Steuerkammer, die über einen Servokanal mit dem Eingangskanal kommuniziert und zu ihrer Druckentlastung über ein Pilotventil, das ein zweites Schließteil aufweist, mit einer Druckentlastungskammer verbunden ist, die über einen Druckentlastungskanal mit dem Ausgangskanal kommuniziert. Des Weiteren ist das erfindungsgemäße Servoventil dadurch gekennzeichnet, dass in dem Eingangskanal ein Drosselungszapfen beweglich geführt ist, der mit einem beweglichen, die Membran berührenden Ventilkörper verbunden ist, der außerhalb des Ventilsitzes zwischen der Membran und dem Eingangskanal angeordnet ist.

Bei Betätigung des Servoventils wird das Pilotventil geöffnet, so dass die Steuerkammer, d.h. der Raum hinter der Membran entspannt wird. Die Membran wird dabei durch den Wasserdruck am Eingangskanal zurückgedrückt und somit das erste Schließteil vom Ventilsitz abgehoben und damit der Durchfluss zum Ausgangskanal geöffnet. Während des Schließens des Servoventils schiebt die Membran den mit dem Drosselungszapfen verbundenen Ventilkörper gegen die Strömung, wobei der Drosselungszapfen die Strömung ausbremst. Dadurch wird das Schließen des Servoventils etwas verlangsamt. Durch diese Verlangsamung werden Druckschläge in der an dem Servoventil angeschlossenen Wasserleitung zuverlässig vermieden und ein relativ leises Ventilschließen erzielt.

Der Ventilkörper weist erfindungsgemäß einen parallel zu dem Drosselungszapfen verlaufenden Führungsstift auf, der von der gleichen Seite des Ventilkörpers vorsteht wie der Drosselungszapfen und in einer Sacklochbohrung des Ventilgehäuses beweglich geführt ist. Hierdurch lässt sich eine besonders hohe Sicherheit gegen Verkanten des beweglichen Ventilkörpers erzielen. Vorzugsweise ist dabei der Abstand zwischen dem Drosselungszapfen und dem Führungsstift größer als der Durchmesser des zwischen dem Eingangskanal und dem Ausgangskanal angeordneten Ventilsitzes.

Eine vorteilhafte Ausgestaltung des erfindungsgemäßen Servoventils sieht vor, dass der Drosselungszapfen einen sich zu seinem freien Zapfenende hin verjüngenden Abschnitt aufweist, an dem radial abstehende Rippen angeformt sind. Der sich verjüngende Abschnitt des Drosselungszapfens begünstigt das druckschlagfreie, leise Schließen des Servoventils. Die radial abstehenden Rippen des Drosselungszapfens stellen eine zuverlässige Führung des Drosselungszapfens im Eingangskanal sicher. Zudem wirken die Rippen auch Schwingungen des sich verjüngenden Zapfenabschnitts in radialer Richtung des Drosselungszapfens entgegen, wodurch das erfindungsgemäße Servoventil besonders leise schließt.

Nach einer weiteren bevorzugten Ausgestaltung weist der mit dem Drosselungszapfen verbundene Ventilkörper einen ringscheibenförmigen Abschnitt auf. Der ringscheibenförmige Ventilkörperabschnitt ermöglicht eine störungsfreie Anordnung des Ventilkörpers außerhalb des Ventilsitzes, begünstigt die Führung des beweglichen Ventilkörpers im Ventilgehäuse und verleiht dem Ventilkörper bei alledem eine relativ hohe Biegesteifigkeit.

Eine weitere vorteilhafte Ausgestaltung des erfindungsgemäßen Servoventils sieht vor, dass der Ventilkörper an seinem Außenumfang einen Kragen aufweist, der in die gleiche Richtung wie der Drosselungszapfen vorsteht. Der Kragen verbessert die Biegesteifigkeit des Ventilkörpers und dessen Führung im Ventilgehäuse und unterstützt die Funktion des Servoventils, indem er einen Hohlraum unterhalb des Ventilkörpers sicherstellt, so dass der am Eingangskanal anstehende Wasserdruck auch im geschlossenen Zustand des Servoventils an der Unterseite der das erste Schließteil bildenden Membran wirksam ist.

Eine weitere vorteilhafte Ausgestaltung des erfindungsgemäßen Servoventils ist dadurch gekennzeichnet, dass das erste Schließteil einen in den Ausgangskanal mit radialem Spiel hineinragenden Zapfen aufweist, an dem radial vorstehende Zentrierrippen ausgebildet sind, deren Außenkanten in Richtung des freien Endes des Zapfens konvergieren. Hierdurch wird eine verkantungsfreie, optimale Führung des ersten Schließteiles während der Schließphase des Servoventils erzielt.

Nach einer weiteren vorteilhaften Ausgestaltung des erfindungsgemäßen Servoventils ist in dessen Servokanal oder in einem von dem Servokanal abzweigenden Kanal ein bewegliches, flüssigkeitsströmungsbetätigtes Drosselelement angeordnet. Durch das bewegliche, flüssigkeitsströmungsbetätigte Drosselelement werden Kalkablagerungen und dergleichen in dem Drosselbereich mechanisch abgetragen. Das erfindungsgemäße Servoventil ist somit in dem besagten Drosselbereich (Kanalbereich) selbstreinigend ausgebildet, wodurch die hohe Funktionssicherheit des Servoventils weiter verbessert wird.

Diese selbstreinigende Funktion des Servokanals bzw. Drosselelements lässt sich nach einer weiteren bevorzugten Ausgestaltung des erfindungsgemäßen Servoventils zuverlässig realisieren, indem das Drosselelement mit einem Rückstellelement, vorzugsweise einer Schraubenfeder versehen ist und einen nadelförmigen Abschnitt und einen davon radial abstehenden, durch die Flüssigkeitsströmung beaufschlagten Prallflächenabschnitt aufweist.

Eine weitere vorteilhafte Ausgestaltung des erfindungsgemäßen Servoventils sieht vor, dass in dem Servokanal ein auswechselbarer Einsatz angeordnet ist, der eine zusätzliche Drosselung bewirkt. Der Einsatz verzögert das Schließen des Servoventils. Insbesondere ermöglicht dieser zusätzliche wechselbare Einsatz auf einfache Weise eine Variation der Grundeinstellung des Servoventils hinsichtlich verschiedener Spülmengen, beispielsweise von einer relativ großen Spülmenge zu einer relativ kleinen Spülmenge und umgekehrt. Hinsichtlich der Fertigung des selbstreinigenden Drosselbereiches und der Montage des beweglichen, flüssigkeitsströmungsbetätigten Drosselelements ist es günstig, wenn dieses Drosselelement nach einer weiteren Ausgestaltung des erfindungsgemäßen Servoventils in einem quer zu dem Servokanal verlaufenden Kanal angeordnet ist, dessen Längsmittelachse koaxial innerhalb eines Eingangsstutzens des Servoventils verläuft. Eine das Drosselelement aufnehmende Bohrung kann dann fertigungstechnisch vorteilhaft innerhalb des Eingangsstutzens hergestellt und das Drosselelement auf einfache Weise in den Eingangsstutzen bzw. die Bohrung eingeführt werden. Des Weiteren vereinfacht diese Ausgestaltung den Zugang zu dem im Servokanal angeordneten zusätzlichen wechselbaren Einsatz bei dessen Auswechslung. Denn für eine Auswechselung (Variation) des wechselbaren Einsatzes muss in diesem Fall das flüssigkeitsströmungsbetätigte Drosselelement nicht demontiert und erneut montiert werden. Ferner trägt diese Ausgestaltung zu einer kompakten Größe des Servoventils bei.

Eine weitere vorteilhafte Ausgestaltung des erfindungsgemäßen Servoventils besteht darin, dass der Servokanal beabstandet von der Membran im Gehäuse des Servoventils verläuft. Die Membran enthält in diesem Fall weder eine Strömungsdrosselöffnung noch eine Öffnung zur Durchleitung oder Verlängerung des Servokanals. Dementsprechend wird die Membran weder durch eine dem Servokanal zugeordnete Öffnung noch durch eine Strömungsdrosselöffnung geschwächt. Dies ist hinsichtlich einer störungsfreien Funktion sowie einer möglichst langen Lebensdauer des Servorventils von Vorteil.

Nach einer weiteren vorteilhaften Ausgestaltung des erfindungsgemäßen Servoventils ist in dessen Steuerkammer ein in Richtung des ersten Schließteils vorstehender Anschlag angeordnet, dessen Abstand relativ zu dem ersten Schließteil verstellbar ist. Mittels des verstellbaren Anschlages lässt sich die Spülmenge des Servoventils auf einfache Weise einstellen.

Weitere bevorzugte und vorteilhafte Ausgestaltungen des erfindungsgemäßen Servoventils sind in den Unteransprüchen angegeben.

Nachfolgend wird die Erfindung anhand einer mehrere Ausführungsbeispiele darstellenden Zeichnung näher erläutert. Es zeigen:
- Fig. 1: ein erfindungsgemäßes Servoventil, das ein Ventilunterteil und ein damit lösbar verbundenes Ventiloberteil aufweist, in einer Vorderansicht;
- Fig. 2: das Servoventil der Fig. 1 in einer Seitenansicht, mit Sicht in den Eingangsstutzen;
- Fig. 3: das Servoventil der Fig. 1 in Draufsicht;
- Fig. 4: das Servoventil der Fig. 1 ohne Ventiloberteil und ohne bewegliches Schließteil, in Draufsicht;
- Fig. 5: eine Schnittansicht des Servoventils entlang der Schnittlinie A-A der Fig. 3;
- Fig. 6: eine Seitenansicht des Servoventils auf die dessen Eingangsstutzen gegenüberliegende Seite;
- Fig. 7: eine weitere Draufsicht auf das Servoventil der Fig. 1;
- Fig. 8: eine Schnittansicht des Servoventils entlang der Schnittlinie A-A der Fig. 7;
- Fig. 9: eine Schnittansicht des Servoventils entlang der Schnittlinie B-B der Fig. 6;
- Fig. 10: eine Dichtungsfassung, die zusammen mit einer damit formschlüssig verbindbaren Membran das dem Ventilsitz zugeordnete bewegliche erste Schließteil bildet, in Seitenansicht;
- Fig. 11: einen ringförmigen, einen Drosselzapfen aufweisenden Ventilkörper, in Seitenansicht;
- Fig. 12: den Ventilkörper der Fig. 11 in Unteransicht;
- Fig. 13: eine Draufsicht auf das Ventiloberteil;
- Fig. 14: eine Schnittansicht des Ventiloberteils entlang der Schnittlinie A-A der Fig. 13; und
- Fig. 15: das Servoventil in Seitenansicht gemäß Fig. 6, mit einem an einem Auslösehebel angebrachten Schwimmer.

Das in der Zeichnung dargestellte Servoventil ist insbesondere als Druckspüler für Urinale und WC-Becken bestimmt. Das servogesteuerte Ventil weist ein zweiteiliges Gehäuse auf, das aus einem Gehäuseunterteil 1 und einem damit lösbar verbundenen Gehäuseoberteil 2 aufgebaut ist. Das Gehäuseunterteil 1 und das Gehäuseoberteil 2 definieren eine Steuerkammer 3 und eine Einströmkammer 4, die durch eine zwischen dem Gehäuseunterteil 1 und dem Gehäuseoberteil 2 dichtend eingespannte Membran 5 voneinander getrennt sind. Die Membran 5 besteht vorzugsweise aus Gummi oder einem gummielastischen Werkstoff. Sie kann auch als Rollmembran bezeichnet werden. Mit dem Bezugszeichen 2.1 ist eine umlaufende Nut des Gehäuseoberteils 2 zur Aufnahme einer Ringdichtung bezeichnet.

Das Gehäuseunterteil 1 weist einen Eingangskanal 6 auf, der über eine Eingangsöffnung 7 in die Einströmkammer 4 mündet und an seinem anderen Ende an einem Eingangsstutzen 8 mündet, sowie einen Ausgangskanal 9, der an einem Ausgangsstutzen 10 mündet. Zwischen dem Eingangskanal 6 und dem Ausgangskanal 9 ist ein Ventilsitz 11 angeordnet, der durch ein (erstes) bewegliches Schließteil verschließbar ist. Das Schließteil ist aus der Membran (Rollmembran) 5 und einer Dichtungsfassung 12 gebildet. Die Membran 5 weist eine Ausnehmung auf, an der sie formschlüssig mit der Dichtungsfassung 12 verbunden ist. Die Dichtungsfassung 12 weist hierzu eine Aufnahme bzw. umlaufende Nut 12.1 auf, in welche die Membran 5 formschlüssig eingreift.

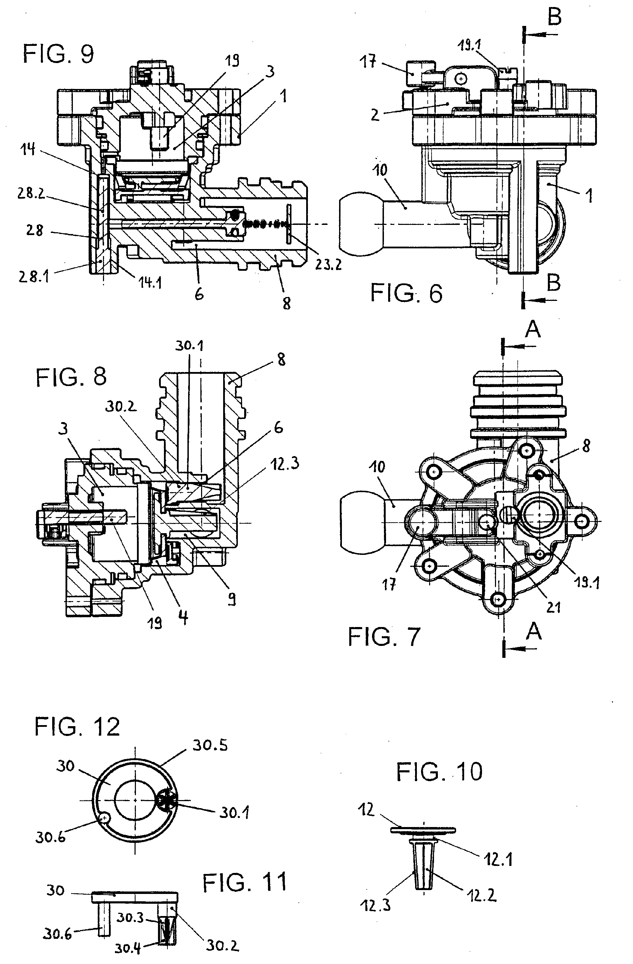

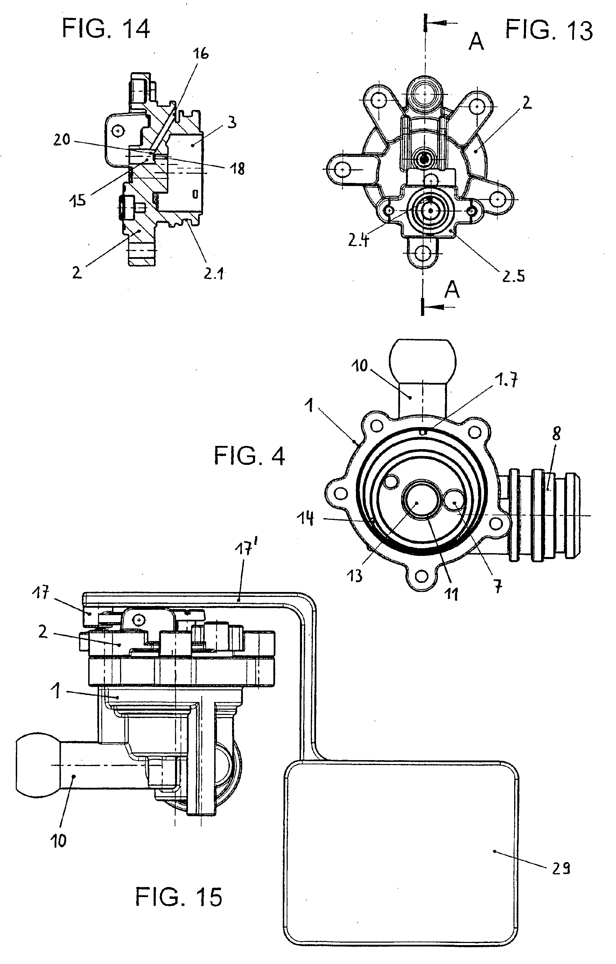

Der Ventilsitz 11 begrenzt eine in die Einströmkammer 4 mündende Ausgangsöffnung 13 und ist vorzugsweise in Form eines umlaufenden Kragens ausgebildet, der in die Einströmkammer 4 vorsteht (vgl. Fig. 8). Der Durchmesser bzw. die Querschnittsfläche der Ausgangsöffnung 13 der Einströmkammer 4 ist deutlich größer als der Durchmesser bzw. die Querschnittsfläche der Eingangsöffnung 7 (vgl. Fig. 4).

Der Raum hinter der Membran, d.h. die Steuerkammer 3, kommuniziert über einen Servokanal (Drosselkanal) 14 mit dem Eingangskanal 6. Der Servokanal 14 verläuft in dem Gehäuseunterteil 1 mit Abstand von der Membran 5 (vgl. Fig. 9). Des Weiteren ist die Steuerkammer 3 zu ihrer Druckentlastung über ein Pilotventil, das ein zweites Schließteil aufweist, mit einer Druckentlastungskammer 15 verbunden, die über einen Druckentlastungskanal 16 und eine Entlastungsbohrung 1.7 im Gehäuseunterteil 1 mit dem Ausgangskanal 9 kommuniziert.

Das Pilotventil ist mit einem Auslösehebel 17 gekoppelt. Alternativ oder zusätzlich kann das Pilotventil auch mit einer elektrisch oder elektromagnetisch steuerbaren Auslösevorrichtung versehen sein.

Im geschlossenen Zustand des Servoventils steht der Flüssigkeits- bzw. Wasserdruck am Eingangskanal 6 an, wobei die Membran 5 dichtend auf dem Ventilsitz 11 liegt. In der Steuerkammer 3 herrscht im geschlossenen Zustand des Servoventils der gleiche Wasserdruck wie im Eingangskanal 6 und in der Einströmkammer 4. Die Flächendifferenz der Membran 5 zum Ausgangskanal 9 bildet mit dem Wasserdruck die Schließkraft des Servoventils.

Zur Betätigung des Servoventils wird der Auslösehebel 17 bewegt bzw. die elektrisch oder elektromagnetisch steuerbare Auslösevorrichtung aktiviert. Dadurch wird eine Entlastungsbohrung 18 freigegeben, welche die Steuerkammer 3 mit der Druckentlastungskammer 15 verbindet, die wiederum über den Druckentlastungskanal 16 mit dem Ausgangskanal 9 verbunden ist. Auf diese Weise wird die Steuerkammer 3 entspannt, so dass die Membran 5 durch den Wasserdruck am Eingangskanal 6 zurückgedrückt bzw. abgehoben und somit der Durchfluss zum Ausgangskanal 9 geöffnet wird.

Das Gehäuseoberteil 2 weist einen verstellbaren Anschlag 19 auf, der in der Steuerkammer 3 in Richtung der mit der Membran 5 verbundenen Dichtungsfassung 12 vorsteht. Der Abstand des Anschlages 19 relativ zu der Dichtungsfassung 12 kann mittels einer an der Außen- bzw. Oberseite des Gehäuseoberteils 2 zugänglichen Einstellschraubenkopf 19.1 verstellt werden. Der verstellbare Anschlag 19 bestimmt den Öffnungsweg der Membran (Rollmembran) 5 und somit die Größe des Raumes hinter der Membran 5, welcher zum Schließen des Servoventils aufgefüllt werden muss. Je größer dieser Raum ist, desto größer ist die bei Betätigung des Servoventils abgegebene Spülwassermenge.

Nach Loslassen des Auslösehebels 17 bzw. Deaktivierung der elektrisch oder elektromagnetisch steuerbaren Auslösevorrichtung verschließt das Schließteil des Pilotventils die Dichtfläche 20 der Entlastungsbohrung 18. Hierzu ist dem Auslösehebel 17 beispielsweise ein in die Druckentlastungskammer 15 beweglich eingesetzter Stößel 21 zugeordnet. Der Stößel 21 ist in Richtung der Dichtfläche 20 der Entlastungsbohrung 18 federbelastet und an seinem der Entlastungsbohrung 18 zugewandeten Ende mit einer Dichtung versehen.

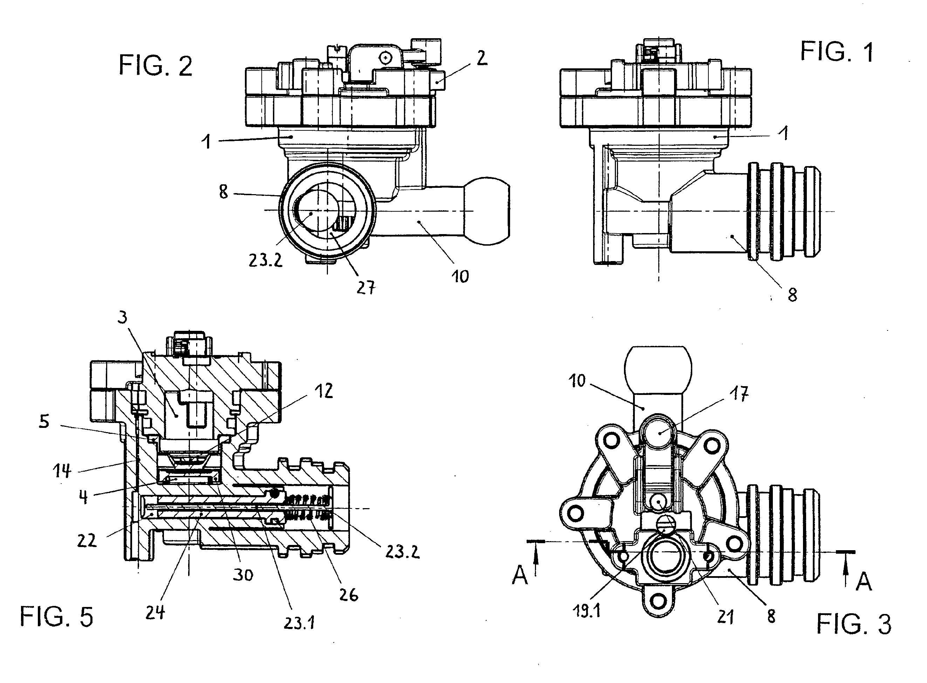

In dem dargestellten Ausführungsbeispiel ist der Servokanal 14 mit dem Eingangskanal 6 über einen Kanal 22 verbunden. In dem vom Servokanal 14 abzweigenden Kanal 22 ist ein bewegliches, flüssigkeitsströmungsbetätigtes Drosselelement 23 angeordnet. Das Drosselelement 23 weist einen nadelförmigen Abschnitt 23.1 und einen davon radial abstehenden, durch die Flüssigkeitsströmung beaufschlagten Prallflächenabschnitt 23.2 auf. Das Drosselelement 23, und zwar dessen nadelförmiger Abschnitt 23.1 ist beweglich in einem hülsenförmigen Drosseleinsatz 24 geführt, der formschlüssig und mittels eines O-Ringes 25 abgedichtet in den stufenförmig ausgebildeten Kanal 22 eingesteckt ist. Zwischen dem Prallflächenabschnitt (Prallteller) 23.2 und der ihm zugewandten Stirnseite des Drosseleinsatzes 23 ist eine Schraubenfeder 26 angeordnet, die als Rückstellelement dient und den nadelförmigen Abschnitt 23.1 des Drosselelements 23 umgibt. Die Längsmittelachse des Kanals 22 verläuft parallel zur Längsmittelachse des Eingangsstutzens 8, dementsprechend verläuft auch der nadelförmige Abschnitt 23.1 des Drosselelements 23 parallel zur Längsmittelachse des Eingangsstutzens 8. Der Prallteller 23.2 kann beispielsweise kreisscheibenförmig ausgebildet sein. Der Durchmesser des Pralltellers 23.2 ist deutlich kleiner als der Innendurchmesser (Innenweite) des Eingangsstutzens 8. In Fig. 2 ist zu erkennen, dass der Prallteller und der Eingangskanal eine sichelförmige Öffnung bzw. Einengung 27 definieren.

Beim Einsetzen der Wasserströmung wird der Prallteller 23.2 durch die Wasserströmung angestoßen bzw. in Richtung des in dem Kanal 22 festgelegten Drosseleinsatzes 24 gedrückt, wobei der nadelförmige Abschnitt 23.1 des Drosselelements 23 entsprechend mitbewegt wird. Dadurch ist der durch den Drosseleinsatz 24 und den nadelförmigen Abschnitt des Drosselelements 23 definierte Drosselbereich selbstreinigend ausgestaltet.

In dem quer zu dem Kanal 22 verlaufenden Servokanal 14 ist ein auswechselbarer Einsatz 28 angeordnet, der eine zusätzliche Drosselung bewirkt. Der Servokanal 14 ist stufenförmig ausgebildet, wobei sein größter Innendurchmesser in dem an der Außenseite des Ventilgehäuses 1 mündenden Kanalabschnitt 14.1 vorliegt. Dieser Kanalabschnitt 14.1 besitzt ein Innengewinde. Der Einsatz 28 ist stiftförmig ausgebildet und weist einen durchmessererweiterten Kopf 28.1 auf, der mit einem dem Innengewinde des Kanalabschnitts 14.1 zugeordneten Außengewinde versehen ist. Der Einsatz 28 ist unter Verwendung einer Ringdichtung wasserdicht in den abgestuften Servokanal 14 eingeschraubt, wobei der stiftförmige Abschnitt 28.2 des Einsatzes 28 und der Servokanal 14 einen Ringraum definieren, über den der Eingangskanal 6 mit der Steuerkammer 3 kommuniziert.

Durch den durch den hülsenförmigen Einsatz 24 und den nadelförmigen Drosselelementabschnitt 23.1 definierten Spalt bzw. Ringspalt sowie den Servokanal 14 strömt Druckwasser in die Steuerkammer 3. Dort baut sich Druck auf, der die Membran 5 in Richtung Ventilsitz 11 bzw. Ausgangsöffnung 9 drückt.

Erfindungsgemäß ist in dem Eingangskanal 6 ein Drosselungszapfen 30.1 geführt. Der Drosselungszapfen 30.1 ist mit einem beweglichen, die Membran (Rollmembran) 5 berührenden Ventilkörper 30 verbunden, der außerhalb des Ventilsitzes 11 zwischen der Membran 5 und dem Eingangskanal 6 angeordnet ist. Durch strömendes Wasser wird der Ventilkörper 30 gegen die Membran 5 gedrückt. Während des Schließens des Servoventils schiebt die Membran 5 den Ventilkörper 30 gegen die Strömung (Einströmrichtung), wobei der Drosselungszapfen 30.1 die Strömung ausbremst. Dadurch wird das Schließen des Servoventils geringfügig verzögert, d.h. verlangsamt, und somit werden Druckschläge in der an dem Servoventil angeschlossenen Wasserleitung vermieden.

Der Drosselungszapfen 30.1 besitzt einen zylindrischen Abschnitt 30.2 und einen sich zu seinem freien Zapfenende hin verjüngenden Abschnitt 30.3, an dem radial abstehende Rippen 30.4 angeformt sind. Die Rippen 30.4 dienen der Führung des Drosselungszapfens 30.1 in dem Eingangskanal 6 und sind entgegen der Einström- oder Zulaufrichtung des Servoventils orientiert. Im geschlossenen Zustand des Servoventils befindet sich der zylindrische Abschnitt 30.2 des Drosselungszapfens 30.1 mit radialem Spiel im Eingangskanal 6 (vgl. Fig. 8).

Der den Drosselungszapfen 30.1 tragende Ventilkörper 30 ist ringscheibenförmig ausgebildet. Er weist an seinem Außenumfang einen Kragen 30.5 auf, der in die gleiche Richtung wie der Drosselungszapfen 30.1 vorsteht. Ferner weist der Ventilkörper 30 einen parallel zu dem Drosselungszapfen 30.1 verlaufenden Führungsstift 30.6 auf. Der Führungsstift 30.6 steht an der gleichen Seite des Ventilkörpers 30 vor wie der Drosselungszapfen 30.1 und ist in einer Sacklochbohrung des Gehäuseunterteils 1 des Servoventils beweglich geführt. Der Abstand zwischen Drosselungszapfen 30.1 und Führungsstift 30.6 ist größer als der Durchmesser des zwischen Eingangskanal 6 und Ausgangskanal 9 angeordneten Ventilsitzes 11 (vgl. Figuren 4 und 11).

Das dem Ventilsitz 11 zugeordnete Schließteil, und zwar die Dichtungsfassung 12 weist einen in den Ausgangskanal 9 mit radialem Spiel hineinragenden Zapfen 12.2 auf. An dem Zapfen 12.2 sind radial vorstehende Zentrierrippen 12.3 ausgebildet, deren Außenkanten in Richtung des freien Endes des Zapfens 12.2 konvergieren (vgl. Figuren 8 und 10).

Das Gehäuseoberteil 2 weist vorzugsweise eine Aufnahme 2.5 für ein elektrisch ansteuerbares Pilotventil (nicht gezeigt) auf. Mit dem Bezugszeichen 2.4 ist in Fig. 13 eine Entlastungsbohrung für dieses Pilotventil bezeichnet. Durch ein solches elektrisch ansteuerbares Pilotventil kann die manuelle Betätigung des Servoventils durch eine berührungslose Auslösung ergänzt bzw. ersetzt werden.

In Fig. 15 ist ein Ausführungsbeispiel dargestellt, bei dem an einem mit dem Pilotventil gekoppelten Auslösehebel 17' ein Schwimmer 29 angeordnet ist. Diese Ausgestaltung ist für einen Einsatz des erfindungsgemäßen Servoventils als Füllventil in einem Spülkasten bestimmt. Auch bei einer solchen Verwendung ist das durch das Ausbremsen der Strömung bewirkte leise Schließen des erfindungsgemäßen Servoventils von Vorteil.

Die Ausführung der vorliegenden Erfindung ist nicht auf die vorstehend beschriebenen Ausführungsbeispiele beschränkt. Vielmehr sind zahlreiche Varianten denkbar, die auch bei einer von den in der Zeichnung dargestellten Ausführungsbeispielen abweichenden Gestaltung von der in den beiliegenden Ansprüchen angegebenen Erfindung Gebrauch machen.

## Patentansprüche

1. Servoventil für Flüssigkeiten, insbesondere zur Druckspülung eines Urinals, mit einem zwischen einem Eingangskanal (6) und einem Ausgangskanal (9) angeordneten Ventilsitz (11), der durch ein aus einer Membran (5) gebildetes erstes bewegliches Schließteil verschließbar ist, und mit einer Steuerkammer (3), die über einen Servokanal (14) mit dem Eingangskanal (6) kommuniziert und die zu ihrer Druckentlastung über ein Pilotventil, das ein zweites Schließteil aufweist, mit einer Druckentlastungskammer (15) verbunden ist, die über einen Druckentlastungskanal (16) mit dem Ausgangskanal (9) kommuniziert, **dadurch gekennzeichnet, dass** in dem Eingangskanal (6) ein Drosselungszapfen (30.1) beweglich geführt ist, der mit einem beweglichen, die Membran (5) berührenden Ventilkörper (30) verbunden ist, der außerhalb des Ventilsitzes (11) zwischen der Membran (5) und dem Eingangskanal (6) angeordnet ist, wobei der Ventilkörper (30) einen parallel zu dem Drosselungszapfen (30.1) verlaufenden Führungsstift (30.6) aufweist, der von der gleichen Seite des Ventilkörpers (30) vorsteht wie der Drosselungszapfen (30.1) und in einer Sacklochbohrung des Gehäuses (1) des Servoventils beweglich geführt ist.

2. Servoventil nach Anspruch 1, **dadurch gekennzeichnet, dass** der Abstand zwischen dem Drosselungszapfen (30.1) und dem Führungsstift (30.6) größer als der Durchmesser des zwischen dem Eingangskanal (6) und dem Ausgangskanal (9) angeordneten Ventilsitzes (11) ist.

3. Servoventil nach Anspruch 1 oder 2, **dadurch gekennzeichnet, dass** der Drosselungszapfen (30.1) einen sich zu seinem freien Zapfenende hin verjüngenden Abschnitt (30.2) aufweist, an dem radial abstehende Rippen (30.4) angeformt sind.

4. Servoventil nach einem der Ansprüche 1 bis 3, **dadurch gekennzeichnet, dass** der Ventilkörper (30) einen ringscheibenförmigen Abschnitt aufweist.

5. Servoventil nach einem der Ansprüche 1 bis 4, **dadurch gekennzeichnet, dass** der Ventilkörper (30) an seinem Außenumfang einen Kragen (30.5) aufweist, der in die gleiche Richtung wie der Drosselungszapfen (30.1) vorsteht.

6. Servoventil nach einem der Ansprüche 1 bis 5, **dadurch gekennzeichnet, dass** das erste Schließteil (12) einen in den Ausgangskanal (9) mit radialem Spiel hineinragenden Zapfen (12.2) aufweist, an dem radial vorstehende Zentrierrippen (12.3) ausgebildet sind, deren Außenkanten in Richtung des freien Endes des Zapfens (12.2) konvergieren.

7. Servoventil nach einem der Ansprüche 1 bis 6, **dadurch gekennzeichnet, dass** in dem Servokanal (14) oder in einem von dem Servokanal (14) abzweigenden Kanal (22) ein bewegliches, flüssigkeitsströmungsbetätigtes Drosselelement (23) angeordnet ist.

8. Servoventil nach Anspruch 7, **dadurch gekennzeichnet, dass** das Drosselelement (23) mit einem Rückstellelement (26) versehen ist und einen nadelförmigen Abschnitt (23.1) und einen davon radial abstehenden, durch die Flüssigkeitsströmung beaufschlagten Prallflächenabschnitt (23.2) aufweist.

9. Servoventil nach Anspruch 7 oder 8, **dadurch gekennzeichnet, dass** das Drosselelement (23) in einem quer zu dem Servokanal (14) verlaufenden Kanal (22) angeordnet ist, dessen Längsmittelachse koaxial innerhalb eines Eingangsstutzens (8) des Servoventils verläuft.

10. Servoventil nach einem der Ansprüche 1 bis 9, **dadurch gekennzeichnet, dass** in dem Servokanal (14) ein auswechselbarer Einsatz (28) angeordnet ist, der eine zusätzliche Drosselung bewirkt.

11. Servoventil nach einem der Ansprüche 1 bis 10, **dadurch gekennzeichnet, dass** der Servokanal (14) beabstandet von der Membran (5) im Gehäuse (1) des Servoventils verläuft.

12. Servoventil nach einem der Ansprüche 1 bis 11, **dadurch gekennzeichnet, dass** in der Steuerkammer (3) ein in Richtung des ersten Schließteils (5, 12) vorstehender Anschlag (19) angeordnet ist, dessen Abstand relativ zu dem ersten Schließteil (5, 12) verstellbar ist.

13. Servoventil nach einem der Ansprüche 1 bis 12, **dadurch gekennzeichnet, dass** das Pilotventil mit einem Auslösehebel (17, 17') gekoppelt ist, an dem ein Schwimmer (29) angeordnet ist.

14. Servoventil nach einem der Ansprüche 1 bis 13, **dadurch gekennzeichnet, dass** das Pilotventil mit einer elektrisch oder elektromagnetisch steuerbaren Auslösevorrichtung versehen ist.

## Claims

1. Servo valve for liquids, in particular for pressure flushing a urinal, comprising a valve seat (11) arranged between an inlet duct (6) and an outlet duct (9), which valve seat can be closed by a first movable closing part formed from a membrane (5), and comprising a control chamber (3) which communicates with the inlet duct (6) via a servo duct (14) and which, so as to relieve the pressure therein, is connected to a pressure-relief chamber (15) by a pilot valve having a second closing part, which pressure-relief chamber communicates with the outlet duct (9) via a pressure-relief duct (16), **characterised in that** a throttle pin (30.1) is movably guided in the inlet duct (6) and is connected to a movable valve body (30) which contacts the membrane (5) and is arranged outside of the valve seat (11) between the membrane (5) and the inlet duct (6), the valve body (30) having a guide peg (30.6) which extends parallel to the throttle pin (30.1), projects from the same side of the valve body (30) as the throttle pin (30.1) and is movably guided in a blind hole bore in the servo valve housing (1).

2. Servo valve according to claim 1, **characterised in that** the spacing between the throttle pin (30.1) and the guide peg (30.6) is larger than the diameter of the valve seat (11) arranged between the inlet duct (6) and the outlet duct (9).

3. Servo valve according to either claim 1 or claim 2, **characterised in that** the throttle pin (30.1) has a portion (30.2) which tapers towards its free pin end, on which portion radially protruding ribs (30.4) are moulded.

4. Servo valve according to any of claims 1 to 3, **characterised in that** the valve body (30) has an annular-disc-shaped portion.

5. Servo valve according to any of claims 1 to 4, **characterised in that** the valve body (30) has on its outer circumference a collar (30.5) which projects in the same direction as the throttle pin (30.1).

6. Servo valve according to any of claims 1 to 5, **characterised in that** the first closing part (12) has a pin (12.2) which protrudes into the outlet duct (9) with a radial play, on which pin radially projecting centring ribs (12.3) are formed, the outer edges of which converge towards the free end of the pin (12.2).

7. Servo valve according to any of claims 1 to 6, **characterised in that** a movable throttle element (23) which is actuated by the flow of liquid is arranged in the servo duct (14) or in a duct (22) which branches off from the servo duct (14).

8. Servo valve according to claim 7, **characterised in that** the throttle element (23) is provided with a restoring element (26) and has a needle-shaped portion (23.1) and a baffle portion (23.2) which protrudes radially therefrom and is acted upon by the flow of liquid.

9. Servo valve according to either claim 7 or claim 8, **characterised in that** the throttle element (23) is arranged in a duct (22) which extends transverse to the servo duct (14), the longitudinal central axis of which duct is coaxial within an inlet connection piece (8) of the servo valve.

10. Servo valve according to any of claims 1 to 9, **characterised in that** a replaceable insert (28), which brings about an additional throttling, is arranged in the servo duct (14).

11. Servo valve according to any of claims 1 to 10, **characterised in that** the servo duct (14) extends in the servo valve housing (1) at a spacing from the membrane (5).

12. Servo valve according to any of claims 1 to 11, **characterised in that** a stop (19) which projects towards the first closing part (5, 12) is arranged in the control chamber (3), the spacing of which stop from the first closing part (5, 12) can be adjusted.

13. Servo valve according to any of claims 1 to 12, **characterised in that** the pilot valve is coupled to a trigger lever (17, 17'), on which a float (29) is arranged.

14. Servo valve according to any of claims 1 to 13, **characterised in that** the pilot valve is provided with a trigger device which can be controlled electrically or electromagnetically.

## Revendications

1. Servosoupape pour liquides, en particulier pour le rinçage par pression d'un urinoir, avec un siège de soupape (11) qui, disposé entre un canal d'entrée (6) et un canal de sortie (9), peut être fermé par une première pièce de fermeture mobile, formée par une membrane (5), et avec une chambre de commande (3) qui communique avec le canal d'entrée (6) par l'intermédiaire d'un servocanal (14) et qui, pour sa décompression, par l'intermédiaire d'une soupape pilote, qui est dotée d'une deuxième pièce de fermeture, est reliée à une chambre de décompression (15) qui communique avec le canal de sortie (9) par l'intermédiaire d'un canal de décompression (16), **caractérisée en ce que**, dans le canal d'entrée (6), est guidé une tige d'étranglement (30.1) mobile, qui est reliée à un corps de soupape (30) mobile, qui, en contact avec la membrane (5), est disposé en dehors du siège de soupape (11), entre la membrane (5) et le canal d'entrée (6), sachant que le corps de soupape (30) est doté d'une tige de guidage (30.6) qui, s'étendant parallèlement à la tige d'étranglement (30.1) est en saillie sur le même côté du corps de soupape (30) que ladite tige d'étranglement (30.1) et est conduite dans un trou borgne du boîtier (1) de la servosoupape.

2. Servosoupape selon la revendication 1, **caractérisée en ce que** l'intervalle entre la tige d'étranglement (30.1) et la tige de guidage (30.6) est plus grand que le diamètre du siège de soupape (11) disposé entre le canal d'entrée (6) et le canal de sortie (9).

3. Servosoupape selon revendication 1 ou 2, **caractérisée en ce que** tige d'étranglement (30.1) est dotée d'une section (30.2) qui s'amincit vers son extrémité libre et sur laquelle sont formées des nervures (30.4) qui font saillie radialement.

4. Servosoupape selon l'une des revendications 1 à 3, **caractérisée en ce que** le corps de soupape (30) est doté d'une section en forme de plaque annulaire.

5. Servosoupape selon l'une des revendications 1 à 4, **caractérisée en ce que** le corps de soupape (30) est doté, sur son pourtour extérieur, d'une collerette (30.5) qui fait saillie dans la même direction que la tige d'étranglement (30.1).

6. Servosoupape selon l'une des revendications 1 à 5, **caractérisée en ce que** la première pièce de fermeture (12) est dotée d'une tige (12.2) qui fait saillie dans le canal de sortie (9) avec un jeu radial et sur laquelle sont formées des nervures de centrage (12.3) en saillie radiale, dont les bords extérieurs convergent dans la direction de l'extrémité libre de la tige (12.2).

7. Servosoupape selon l'une des revendications 1 à 6, **caractérisée en ce que**, dans le servocanal (14) ou dans un canal (22) dérivant du servocanal (14), est disposé un élément d'étranglement (23) mobile qui est actionné par un flux de liquide.

8. Servosoupape selon la revendication 7, **caractérisée en ce que** l'élément d'étranglement (23) est pourvu d'un élément de rappel (26) et présente une section en forme d'aiguille (23.1) ainsi qu'une section à surface de rebondissement (23.2) qui est soumise au flux de liquide.

9. Servosoupape selon revendication 7 ou 8, **caractérisée en ce que** l'élément d'étranglement (23) est disposé dans un canal (22) qui s'étend transversalement par rapport au servocanal (14) et dont l'axe central longitudinal s'étend coaxialement à l'intérieur d'une tubulure d'entrée (8) de la servosoupape.

10. Servosoupape selon l'une des revendications 1 à 9, **caractérisée en ce que**, dans le servocanal (14), est disposé un insert interchangeable (28) qui assure un étranglement supplémentaire.

11. Servosoupape selon l'une des revendications 1 à 10, **caractérisée en ce que** le servocanal (14) s'étend à distance de la membrane (5), dans le boîtier (1) de la servosoupape.

12. Servosoupape selon l'une des revendications 1 à 11, **caractérisée en ce que**, dans la chambre de commande (3), est installée une butée (19) qui, en saillie dans la direction de la première pièce de fermeture (5, 12), est distancée de ladite première pièce de fermeture (5, 12) d'un intervalle qui peut être réglé.

13. Servosoupape selon l'une des revendications 1 à 12, **caractérisée en ce que** la soupape pilote est couplée avec un levier de déclenchement (17, 17') auquel est associé un flotteur (29).

14. Servosoupape selon l'une des revendications 1 à 13, **caractérisée en ce que** la soupape pilote est dotée d'un système de déclenchement qui peut être commandé électriquement ou électro magnétiquement.
